# EUROPEAN PATENT APPLICATION

(11) **EP 3 358 714 A1**
(43) Date of publication of application: **08.08.2018**
(21) Application number: 16851606.0
(22) Date of filing: 28.09.2016
(51) Int. Cl.: H02K 1/18, F04D 13/06, F04D 29/00, H02K 1/14, H02K 7/14

(54) **STATOR, MOTOR, AND PUMP DEVICE**

(30) Priority: 30.09.2015 JP 2015193968
(71) Applicant: Nidec Sankyo Corporation, Suwa-gun, Nagano 393-8511 (JP)
(72) Inventor: UTSUMI Shinichi, Suwa-gun Nagano 393-8511 (JP); OTSUBO Keishi, Suwa-gun Nagano 393-8511 (JP)
(74) Representative: Becker Kurig Straus
(86) International application number: PCT/JP2016/078581
(87) International publication number: WO 2017/057435

(57) **Abstract**

Provided is a stator having a stator core which is a curled core, for which deterioration of the circularity of a circle formed by tip faces of multiple salient pole parts when viewed from an axial direction of the stator can be suppressed even when the stator core has a relatively small number of salient pole parts. In the stator, abutting surfaces 24k are formed on both ends of each of outer peripheral parts 24e constituting an outer peripheral ring section 24a of a stator core 24, and the abutting surfaces 24k of circumferentially adjoining outer peripheral parts 24e are abutted together. Angles formed by first abutting surfaces 24k1, 24k2, that is, an abutted surface 24k which is formed along a joint 24h located at one of the boundaries of the outer peripheral parts 24e in the circumferential direction, and respective center lines CL of salient pole parts 24b which connect with outer peripheral parts 24e1, 24e2 are smaller than an angle formed by each second abutted surface 24k, that is, an abutted surface 24k other than that of the first abutting surfaces 24k1, 24k2, and a center line CL of a salient pole part 24b which connects with the outer peripheral part 24e on which this second abutted surface 24k is formed.

## Description

### TECHNICAL FIELD

The present invention relates to a stator which is used in a motor or the like. Further, the present invention relates to a motor comprising the stator, and to a pump device comprising the motor.

### BACKGROUND ART

Conventionally, a motor which includes a rotor and a cylindrical tube-shaped stator disposed on an outer peripheral side with respect to the rotor has been known (see, for example, Patent Literature 1). In the motor described in Patent Literature 1, a stator includes a stator core and drive coils wound around teeth parts of the stator core through insulators. The stator core is formed by combining a plurality of split cores which are divided in a circumferential direction of the stator. The split core is provided with an outer yoke part connected with an outer side end of the teeth part in a radial direction of the stator. Further, Patent Literature 1 describes that the stator core may utilize a so-called curling core which is formed by bending a belt-shaped core whose outer yoke parts are integrally connected with each other in a circular ring shape and by connecting both end parts of the belt-shaped core with each other.

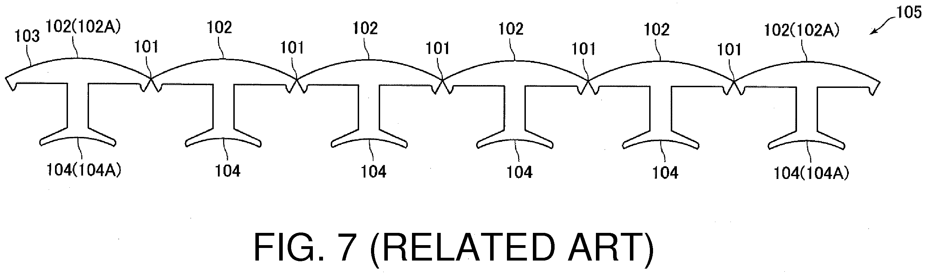

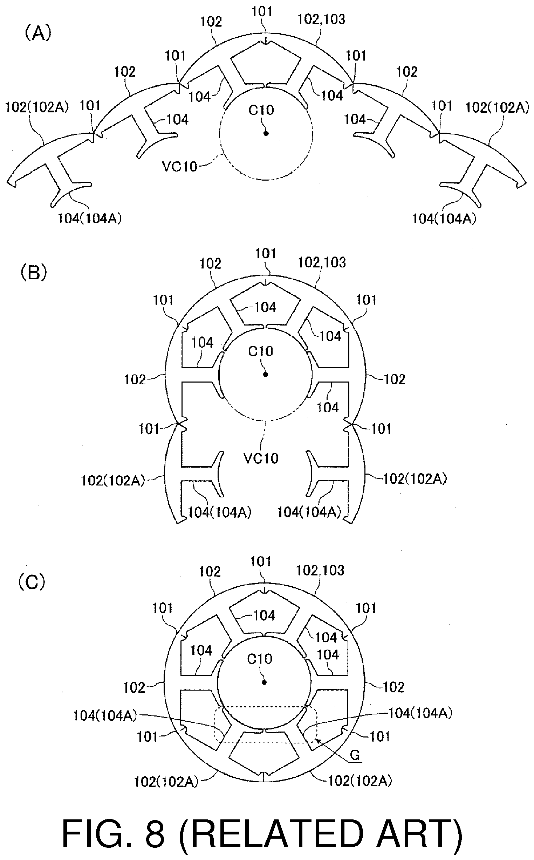

A curling core is, for example, as shown in FIG. 7, formed by using an original core body 105 provided with a belt-shaped portion 103 in a straight line shape, which is structured of a plurality of outer yoke parts 102 connected with each other through connecting parts 101, and teeth parts (salient pole part) 104 which are protruded from each of the plurality of the outer yoke parts 102 in a direction perpendicular to a longitudinal direction of the belt-shaped portion 103. Further, the curling core is, for example, formed by successively bending the belt-shaped portion 103 at the connecting parts 101 in order shown in FIGs. 8(A) through 8(C) and by connecting both ends of the belt-shaped portion 103 with each other so that the belt-shaped portion 103 becomes a circular ring shape and the salient pole parts 104 are protruded to an inner side in a radial direction.

In the motor described in Patent Literature 1, a tip end face of the salient pole part 104 (inner side face in the radial direction of the stator) is formed in a curved face shape which is a circular arc shape when viewed in an axial direction of the stator. The tip end faces of the salient pole parts 104 are disposed on an imaginary circle "VC10" whose center is an axial center "C10" of the stator in a design when viewed in the axial direction of the stator so that an air gap (gap space in the radial direction between the rotor and the stator) is constant in a circumferential direction of the stator.

### CITATION LIST

### PATENT LITERATURE

PATENT LITERATURE 1: Japanese Patent Laid-Open No. 2010-57211

### SUMMARY

### TECHNICAL PROBLEM

In a case that the belt-shaped portion 103 is successively bent in the order shown in FIGs. 8(A) through 8(C), the connecting part 101 which is bent first from a state shown in FIG. 7 to a state shown in FIG. 8(A) is also acted with a force in a bending direction when the belt-shaped portion 103 is secondly bent from the state shown in FIG. 8(A) to a state shown in FIG. 8(B) and is also acted even when the belt-shaped portion 103 is thirdly bent from the state shown in FIG. 8(B) to a state shown in FIG. 8(C). In other words, a force is acted on the first bent connecting part 101 in a bending direction two times after having been bent.

Further, the connecting parts 101 which are secondly bent are also acted with a force in a bending direction when the belt-shaped portion 103 is thirdly bent from the state shown in FIG. 8(B) to the state shown in FIG. 8(C). In other words, a force in a bending direction is acted on the second bent connecting parts 101 once after having been bent. On the other hand, the connecting parts 101 bent thirdly are not acted with a force in a bending direction after having been bent.

According to examinations of the present inventors, the present inventors have found that, for example, in a case that the number of the salient pole parts 104 is small like a case that the number of the salient pole parts 104 is six, when the belt-shaped portion 103 is successively bent as shown in FIG. 8, tip end faces of the salient pole parts 104A connected with two outer side yoke parts 102A disposed at both ends of the belt-shaped portion 103 in the original core body 105 are largely displaced from the imaginary circle "VC10" when viewed in the axial direction of the stator.

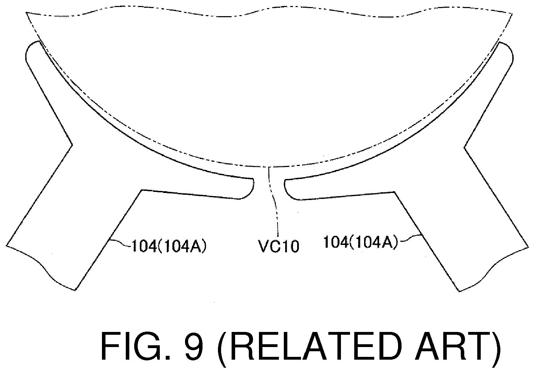

In other words, the present inventors have found that, in a case that the number of the salient pole parts 104 is small, when the belt-shaped portion 103 is successively bent as shown in FIG. 8, the circularity of a circle formed by the tip end faces of six salient pole parts 104 is deteriorated in the salient pole parts 104A when viewed in the axial direction of the stator. Specifically, the present inventors have found that, as shown in FIG. 9 which is an enlarged view of the "G" part in FIG. 8(C), when viewed in the axial direction of the stator, the tip end faces of the salient pole parts 104A are largely displaced to an outer side in the radial direction from the imaginary circle "VC10" and the circularity of a circle formed by the tip end faces of six salient pole parts 104 is deteriorated in the salient pole parts 104A.

In view of the problem described above, an objective of the present invention is to provide a stator including a stator core, which is a curling core, capable of suppressing deterioration of circularity of a circle which is formed by tip end faces of a plurality of salient pole parts when viewed in an axial direction of the stator even when the number of the salient pole parts of the stator core is relatively small. Further, another objective of the present invention is to provide a motor comprising the stator. In addition, another objective of the present invention is to provide a pump device comprising the motor.

### SOLUTION TO PROBLEM

To achieve the above mentioned objective, the present invention provides a stator formed in a tube shape which includes a coil, an insulation member, and a stator core having a plurality of salient pole parts, and the coil is wound around each of the plurality of the salient pole parts through the insulation member. The stator core is provided with an outer peripheral ring part which is formed in a ring shape and the plurality of the salient pole parts which are protruded from the outer peripheral ring part to an inner side in a radial direction of the stator and are disposed at regular intervals in a circumferential direction of the stator. The outer peripheral ring part is structured of the same number of the outer peripheral parts as the number of the plurality of the salient pole parts, a plurality of the outer peripheral parts is arranged in the circumferential direction and each of the plurality of the outer peripheral parts is connected with one of the salient pole parts. One of boundaries of the outer peripheral parts in the circumferential direction is formed with a joint, and remaining boundaries of the outer peripheral parts in the circumferential direction except the boundary formed with the joint are formed with connecting parts which connect outer side ends of the outer peripheral parts in the radial direction with each other. Each of both ends of the outer peripheral part in the circumferential direction is formed with an abutting face in a flat face shape whose shape when viewed in an axial direction of the stator is a straight line, and the abutting faces of the outer peripheral parts adjacent to each other in the circumferential direction are abutted with each other. When the two abutting faces abutted at the joint are referred to as a first abutting face, and the abutting faces abutted on an inner side in the radial direction of the connecting part are referred to as a second abutting face, an angle formed by the first abutting face and a center line in the circumferential direction of the salient pole part connected with the outer peripheral part formed with the first abutting face is set to be smaller than an angle formed by the second abutting face and a center line in the circumferential direction of the salient pole part connected with the outer peripheral part formed with the second abutting face when viewed in the axial direction.

In the stator according to the present invention, the outer peripheral ring part is structured of a plurality of outer peripheral parts arranged in a circumferential direction of the stator, a joint is formed at one of boundaries of the outer peripheral parts in the circumferential direction, and remaining portions of the boundaries of the outer peripheral parts in the circumferential direction except the joint are formed with connecting parts which connect outer side ends of the outer peripheral parts in a radial direction with each other. Further, in the present invention, each of both ends of the outer peripheral part in the circumferential direction is formed with an abutting face in a flat face shape whose shape when viewed in an axial direction of the stator is a straight line, and the abutting faces of the outer peripheral parts adjacent to each other in the circumferential direction are abutted with each other. In addition, in the present invention, when the two abutting faces abutted at the joint are referred to as a first abutting face, and the abutting faces abutted on an inner side in the radial direction of the connecting part are referred to as a second abutting face, an angle formed by the first abutting face and a center line in the circumferential direction of the salient pole part connected with the outer peripheral part formed with the first abutting face is set to be smaller than an angle formed by the second abutting face and a center line in the circumferential direction of the salient pole part connected with the outer peripheral part formed with the second abutting face when viewed in the axial direction.

Therefore, according to the present invention, in the stator core which is manufactured so that a belt-shaped core structured of a plurality of the outer peripheral parts connected with each other through the connecting parts is successively bent at the connecting parts, and that the two first abutting faces are finally abutted with each other to form the joint, even when the number of the salient pole parts is relatively small, the tip end faces of the salient pole parts connected with the outer peripheral parts finally bent can be set close to the above-mentioned imaginary circle "VC10" when viewed in the axial direction of the stator. Accordingly, in the present invention, in the stator having the stator core which is a curling core, even when the number of the salient pole parts of the stator core is relatively small, deterioration of circularity of a circle formed by the tip end faces of a plurality of the salient pole parts can be suppressed when viewed in the axial direction of the stator.

In the present invention, it is preferable that, when the outer peripheral part formed with the first abutting face is referred to as a first outer peripheral part, an angle formed by the second abutting face of the first outer peripheral part and a center line in the circumferential direction of the salient pole part connected with the first outer peripheral part is set to be larger than an angle formed by the second abutting face of the outer peripheral part except the first outer peripheral part and a center line in the circumferential direction of the salient pole part connected with the outer peripheral part formed with the second abutting face. According to this structure, the tip end face of the salient pole part connected with the first outer peripheral part can be further set close to the above-mentioned imaginary circle "VC10". Therefore, even when the number of the salient pole parts of the stator core, which is a curling core, is relatively small, deterioration of circularity of a circle formed by the tip end faces of a plurality of the salient pole parts can be effectively suppressed when viewed in the axial direction of the stator.

In the present invention, it is preferable that, when one of the two abutting faces abutted with each other at the joint is referred to as a one side first abutting face and the other is referred to as the other side first abutting face, an angle formed by the one side first abutting face and a center line in the circumferential direction of the salient pole part connected with the outer peripheral part formed with the one side first abutting face is equal to an angle formed by the other side first abutting face and a center line in the circumferential direction of the salient pole part connected with the outer peripheral part formed with the other side first abutting face when viewed in the axial direction.

In the present invention, it is preferable that, when one of the two abutting faces abutted with each other at the joint is referred to as a one side first abutting face and the other is referred to as the other side first side abutting face, the one side first abutting face is formed with a positioning protruded part which is protruded in the circumferential direction, and the other side first abutting face is formed with a recessed part with which the protruded part is engaged.

In the present invention, it is preferable that the stator core is provided with six pieces of the salient pole parts, the angle formed by the second abutting face and the center line in the circumferential direction of the salient pole part connected with the outer peripheral part formed with the second abutting face is 30° when viewed in the axial direction, and the angle formed by the first abutting face and the center line in the circumferential direction of the salient pole part connected with the outer peripheral part formed with the first abutting face is less than 30° when viewed in the axial direction.

The stator in the present invention may be used in a motor including a rotor which is provided with a drive magnet and is disposed on an inner peripheral side with respect to the stator. Further, the motor may be used in a pump device which includes an impeller attached to the rotor, a pump chamber in which the impeller and the rotor are disposed and through which a fluid is passed, a partition member which is disposed between the stator and the pump chamber and which prevents an inflow of the fluid in the pump chamber into an arrangement portion of the stator, and a resin sealing member made of resin which covers the stator. According to the motor and the pump device, even when the number of the salient pole parts of the stator core, which is a curling core, is relatively small, deterioration of circularity of a circle formed by the tip end faces of a plurality of the salient pole parts can be suppressed when viewed in the axial direction of the stator.

### EFFECTS OF THE INVENTION

As described above, according to the present invention, in the stator having the stator core which is a curling core, even when the number of the salient pole parts of the stator core is relatively small, deterioration of circularity of a circle formed by the tip end faces of a plurality of the salient pole parts can be suppressed when viewed in the axial direction of the stator. Further, according to the motor and the pump device, even when the number of the salient pole parts of the stator core, which is a curling core, is relatively small, deterioration of circularity of a circle formed by the tip end faces of a plurality of the salient pole parts can be suppressed when viewed in the axial direction of the stator.

### BRIEF DESCRIPTION OF THE DRAWINGS

FIG. 1 is a cross-sectional view showing a pump device in accordance with an embodiment of the present invention.
FIG. 2 is a perspective view showing a stator in FIG. 1.
FIG. 3 is a plan view showing a stator core in FIG. 2.
FIG. 4 is an explanatory enlarged view showing a specific structure of an outer peripheral part shown in FIG. 3.
FIG. 5 is a plan view showing an original core body which becomes a stator core shown in FIG. 3 after being processed.
FIG. 6 are explanatory views showing a forming method for the stator core shown in FIG. 3.
FIG. 7 is an explanatory view showing a structure of a stator core in a prior art.
FIG. 8 are views for explaining a problem in the prior art.
FIG. 9 is an enlarged view showing the "G" part in FIG. 8.

### DESCRIPTION OF EMBODIMENTS

An embodiment of the present invention will be described below with reference to the accompanying drawings.

### (Schematic Structure of Pump Device)

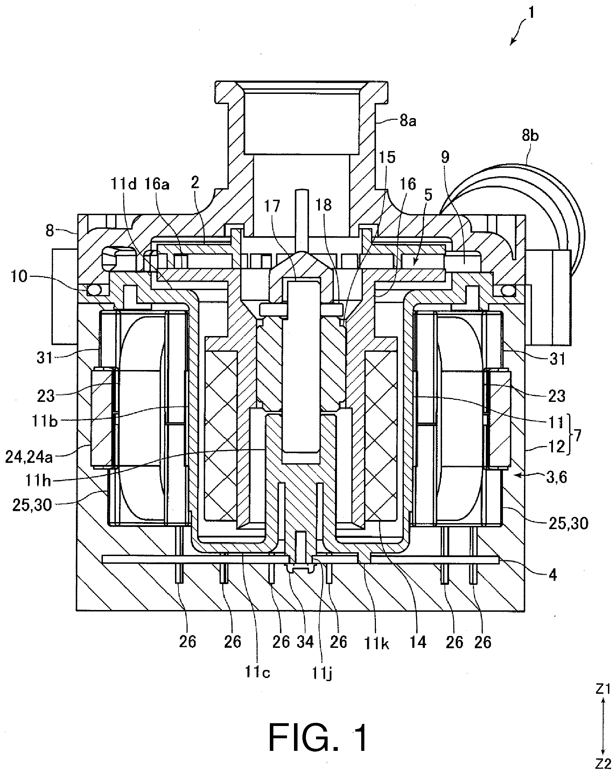

FIG. 1 is a cross-sectional view showing a pump device 1 in accordance with an embodiment of the present invention. In the following descriptions, an upper side in FIG. 1 ("Z1" direction side) is referred to as an "upper" side and a lower side in FIG. 1 ("Z2" direction side) is referred to as a "lower" side.

A pump device 1 in this embodiment is a pump referred to as a canned pump (canned motor pump), which includes an impeller 2, a motor 3 structured to rotate the impeller 2, and a circuit board 4 configured to control the motor 3. The motor 3 is structured of a rotor 5 and a stator 6. The impeller 2, the motor 3 and the circuit board 4 are disposed inside a case body structured of a housing 7 and an upper case 8 which covers an upper part of the housing 7. The housing 7 and the upper case 8 are fixed to each other with a screw not shown.

The upper case 8 is formed with an intake part 8a for a fluid and an ejection part 8b for the fluid. A pump chamber 9 where a fluid inhaled through the intake part 8a is passed toward the ejection part 8b is formed between the housing 7 and the upper case 8. Further, a sealing member (O-ring) 10 is disposed at a joined portion between the housing 7 and the upper case 8 for securing airtightness of the pump chamber 9. The housing 7 includes a partition member 11 which is disposed between the pump chamber 9 and the stator 6 so as to separate the pump chamber 9 from the stator 6, and a resin sealing member 12 made of resin which covers an under face and a side face of the partition member 11.

The rotor 5 includes a drive magnet 14, a sleeve 15 in a cylindrical tube shape, and a holding member 16 which holds the drive magnet 14 and the sleeve 15. The holding member 16 is formed in a substantially cylindrical tube shape with a flange. The drive magnet 14 is fixed on an outer peripheral side of the holding member 16 and the sleeve 15 is fixed on an inner peripheral side of the holding member 16. An impeller 2 is fixed to a flange part 16a disposed on an upper side of the holding member 16. The impeller 2 and the rotor 5 are disposed inside the pump chamber 9.

The rotor 5 is rotatably supported by a fixed shaft 17. The fixed shaft 17 is disposed so that an axial direction of the fixed shaft 17 and the upper and lower direction are coincided with each other. In other words, the upper and lower direction is an axial direction of the rotor 5. An upper end of the fixed shaft 17 is held by the upper case 8 and a lower end of the fixed shaft 17 is held by the housing 7. The fixed shaft 17 is inserted through an inner peripheral side of the sleeve 15. Further, the fixed shaft 17 is attached with a thrust bearing member 18 which is abutted with an upper end face of the sleeve 15. In this embodiment, the sleeve 15 functions as a radial bearing for the rotor 5, and the sleeve 15 and the thrust bearing member 18 function as a thrust bearing for the rotor 5.

The stator 6 includes drive coils 23 as a coil, a stator core 24, and insulators 25 as an insulation member, and the stator 6 is formed in a tube shape as a whole. Specifically, the stator 6 is formed in a substantially cylindrical tube shape. The stator 6 is disposed on an outer peripheral side of the rotor 5 through the partition member 11. In other words, the rotor 5 is disposed on an inner peripheral side of the stator 6. Further, the stator 6 is disposed so that an axial direction of the stator 6 and the upper and lower direction are coincided with each other. In other words, the upper and lower direction is an axial direction of the stator 6. Further, the stator 6 includes terminal pins 26 around which end parts of the drive coils 23 are bound and electrically connected. A specific structure of the stator 6 will be described below. In the following descriptions, a radial direction of the rotor 5 and the stator 6 is referred to as a "radial direction", and a circumferential direction of the rotor 5 and the stator 6 is referred to as a "circumferential direction".

The partition member 11 is formed in a substantially bottomed cylindrical tube shape with a flange and is provided with a cylindrical tube part 11b, a bottom part 11c and a flange part 11d. The cylindrical tube part 11b is formed in a cylindrical tube shape and is disposed so as to cover an outer peripheral face of the drive magnet 14. Further, the cylindrical tube part 11b is disposed so that an axial direction of the cylindrical tube part 11b and the upper and lower direction are substantially coincided with each other. The bottom part 11c is formed in a substantially circular plate shape which closes a lower end of the cylindrical tube part 11b. The flange part 11d is formed so as to be enlarged from an upper end of the cylindrical tube part 11b to an outer side in the radial direction.

An upper face of the bottom part 11c is formed with a shaft holding part 11h which holds a lower end side of the fixed shaft 17 so as to be protruded to an upper side. An under face of the bottom part 11c is formed with a fixing projection 11j for fixing a circuit board 4 to the partition member 11 and a positioning projection 11k for positioning the circuit board 4 so as to protrude to a lower side. As shown in FIG. 1, an inner side and an upper side of the partition member 11 is structured to be the pump chamber 9, and the impeller 2 and the rotor 5 are disposed on the inner side and the upper side of the partition member 11. The partition member 11 functions to prevent inflow of the fluid in the pump chamber 9 into an arrangement portion of the stator 6.

The circuit board 4 is fixed to an under face side of the bottom part 11c so that a thickness direction of the circuit board 4 and the upper and lower direction are coincided with each other. Specifically, the circuit board 4 is fixed to the under face side of the bottom part 11c by a screw 34 screwed into the fixing projection 11j in a state positioned by the fixing projection 11j and the positioning projection 11k. Further, lower end side portions of the terminal pins 26 are fixed to the circuit board 4 by soldering.

The resin sealing member 12 completely covers the circuit board 4, the drive coils 23 and the like to protect the circuit board 4, the drive coils 23 and the like from a fluid. The resin sealing member 12 is formed by injecting resin material to the partition member 11 in a state that the circuit board 4 and the stator 6 are attached to the partition member 11. Specifically, the partition member 11 to which the circuit board 4 and the stator 6 have been attached is disposed inside a die and resin material is injected in the die and cured to form the resin sealing member 12. The resin sealing member 12 is formed in a substantially bottomed cylindrical tube shape as a whole and completely covers the circuit board 4, the stator 6, the cylindrical tube part 11b and the bottom part 11c. Further, the resin sealing member 12 covers an under face of the flange part 11d.

### (Structure of Stator)

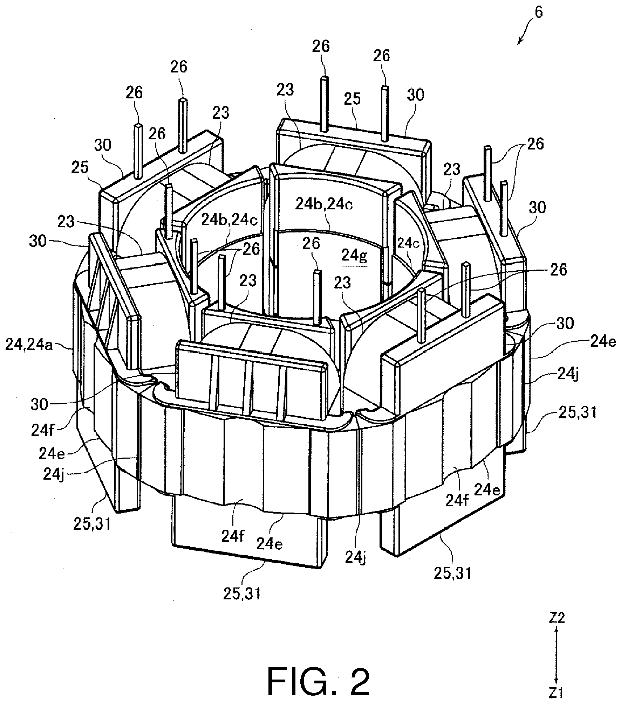

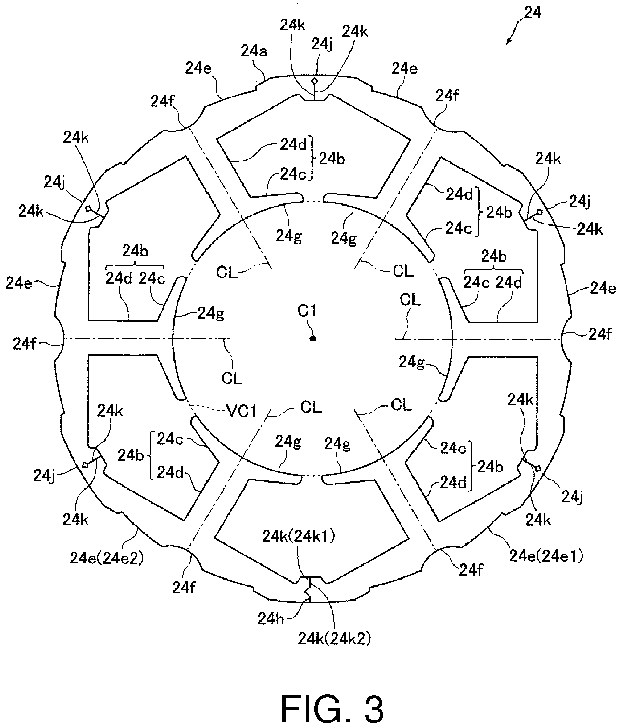

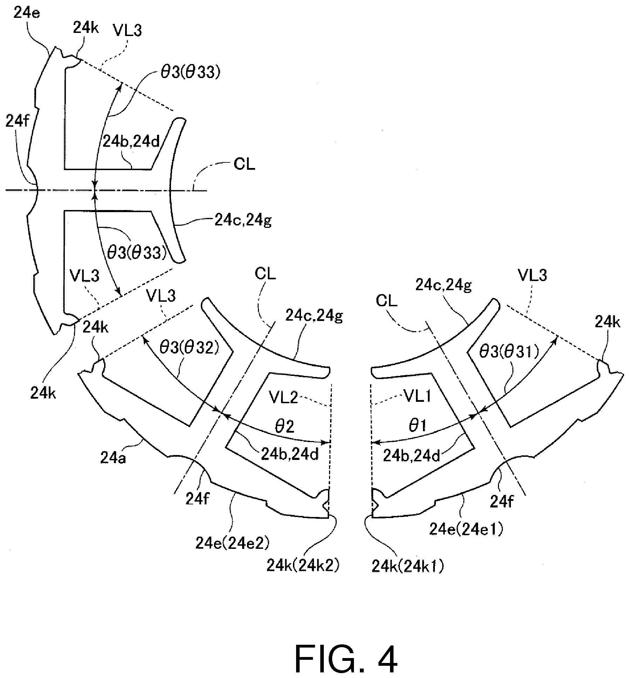

FIG. 2 is a perspective view showing the stator 6 in FIG. 1. FIG. 3 is a plan view showing the stator core 24 in FIG. 2. FIG. 4 is an enlarged view for explaining a specific structure of an outer peripheral part 24e shown in FIG. 3.

The stator 6 includes, as described above, the drive coils 23, the stator core 24, the insulators 25 and the terminal pins 26. The stator core 24 is a laminated core which is structured by laminating thin magnetic plates made of magnetic material. The stator core 24 is, as shown in FIG. 3, provided with an outer peripheral ring part 24a formed in a ring shape and a plurality of salient pole parts 24b which are protruded toward an inner side in the radial direction from the outer peripheral ring part 24a. The stator core 24 in this embodiment is provided with six salient pole parts 24b. Six salient pole parts 24b are formed at equal angular pitches and are disposed at regular intervals in the circumferential direction. In accordance with an embodiment of the present invention, the number of the salient pole parts 24b of the stator core 24 may be the number other than six.

The outer peripheral ring part 24a is formed so that a shape of its outer peripheral face is a substantially circular shape when viewed in the upper and lower direction and that a shape of its inner peripheral face when viewed in the upper and lower direction is formed in a substantially hexagonal ring shape. The outer peripheral face of the outer peripheral ring part 24a structures an outer peripheral face of the stator core 24. An axial center of the outer peripheral ring part 24a when viewed in the upper and lower direction is an axial center of the stator core 24. Further, the axial center of the stator core 24 when viewed in the upper and lower direction is coincided with the axial center "C1" of the stator 6.

The outer peripheral ring part 24a is structured of six outer peripheral parts 24e which are arranged in the circumferential direction. In other words, the outer peripheral ring part 24a is structured of the same number of the outer peripheral parts 24e as the number of the salient pole parts 24b. One outer peripheral part 24e is one portion of the outer peripheral ring part 24a in the circumferential direction, which is a portion between one vertex and its adjacent vertex of the inner peripheral face of the outer peripheral ring part 24a which is formed in a substantially hexagonal shape when viewed in the upper and lower direction. In other words, one outer peripheral part 24e is one portion of the outer peripheral ring part 24a in the circumferential direction, which is a portion corresponding to one side of the inner peripheral face in a substantially hexagonal shape of the outer peripheral ring part 24a when viewed in the upper and lower direction.

An outer side face (outer peripheral face) in the radial direction of the outer peripheral part 24e is formed in a convex curved surface shape whose shape when viewed in the upper and lower direction is formed in a substantially circular arc shape. An inner side face of the outer peripheral part 24e in the radial direction is formed in a flat face shape whose shape when viewed in the upper and lower direction is a straight line shape. The outer peripheral face of the outer peripheral part 24e is formed with a recessed part 24f which is recessed toward an inner side in the radial direction. The recessed part 24f is formed in a circular arc shape when viewed in the upper and lower direction. Further, the recessed part 24f is formed over an entire region of the outer peripheral part 24e in the upper and lower direction. In addition, the recessed part 24f is formed at a center of an outer peripheral face of the outer peripheral part 24e when viewed in the upper and lower direction.

The salient pole part 24b is formed at a center of the outer peripheral part 24e in the circumferential direction. In other words, each of the six outer peripheral parts 24e is connected with one salient pole part 24b. Further, the salient pole part 24b is structured of a salient pole tip end part 24c which is a tip end part of the salient pole part 24b and a connecting part 24d which connects the salient pole tip end part 24c with the outer peripheral ring part 24a. The connecting part 24d is formed in a straight line shape perpendicular to the inner side face in the radial direction of the outer peripheral part 24e. When viewed in the upper and lower direction, the salient pole tip end part 24c is formed in a substantially circular arc shape which is extended to both sides in the circumferential direction from a tip end (inner side end in the radial direction) of the connecting part 24d which is formed in a straight line shape.

A tip end face 24g of the salient pole part 24b (in other words, an inner side face in the radial direction of the salient pole tip end part 24c) is formed in a curved face whose shape when viewed in the upper and lower direction is a circular arc shape. The tip end faces 24g of the six salient pole parts 24b are disposed on an imaginary circle "VC1" in a design with the axial center "C1" of the stator 6 as a center when viewed in the upper and lower direction. Further, the six tip end faces 24g face an outer peripheral face of the drive magnet 14 through the cylindrical tube part 11b.

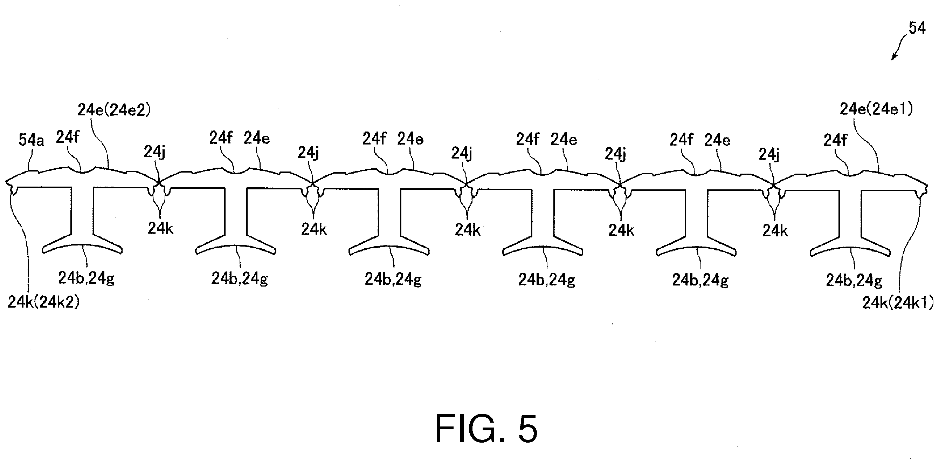

The stator core 24 is a curling core which is structured so that the six outer peripheral parts 24e connected with each other in a straight line shape (see FIG. 5) are bent at boundaries between the outer peripheral parts 24e and that the end parts are connected with each other. In other words, the stator core 24 is formed in a ring shape by connecting the end parts of the core with each other, the core being structured of a belt-shaped core which becomes the outer peripheral ring part 24a and the six salient pole parts 24b extended from one side face of the belt-shaped core. Therefore, as shown in FIG. 3, the joint 24h is formed at one boundary among the boundaries of the six outer peripheral parts 24e in the circumferential direction. In this embodiment, the end parts of the belt-shaped core are welded and fixed to each other in the joint 24h, and a welded mark is left in the joint 24h.

Further, a connecting part 24j which connects outer side ends in the radial direction of the outer peripheral parts 24e is formed at five boundaries of the remaining outer peripheral parts 24e except one boundary formed with the joint 24h among six boundaries of the outer peripheral parts 24e in the circumferential direction. Further, in each of both ends of the outer peripheral part 24e in the circumferential direction is formed with an abutting face 24k in a flat face shape whose shape when viewed in the upper and lower direction is a straight line. The abutting faces 24k of the adjacent outer peripheral parts 24e in the circumferential direction are abutted with each other. At the boundary of the outer peripheral parts 24e where the connecting part 24j is formed, the abutting faces 24k are provided on an inner side of the connecting part 24j in the radial direction, and the abutting faces 24k are abutted with each other on an inner side of the connecting part 24j in the radial direction. Further, at the boundary of the outer peripheral parts 24e where the joint 24h is formed, the entire region in the radial direction is formed to be the abutting face 24k.

In the following descriptions, when two outer peripheral parts 24e disposed on both sides of the joint 24h are distinguishably expressed from four remaining outer peripheral parts 24e, one of the two outer peripheral parts 24e is shown as the "outer peripheral part 24e1" and the other outer peripheral part 24e is shown as the "outer peripheral part 24e2". Further, in a case that the two abutting faces 24k which are abutted with each other at the joint 24h are distinguishably expressed from other abutting faces 24k, the abutting face 24k formed on the outer peripheral part 24e1 of the two abutting faces 24k is shown as the "first abutting face 24k1", and the abutting face 24k formed on the outer peripheral part 24e2 is shown as the "first abutting face 24k2". Further, remaining abutting faces 24k which are abutted with each other on an inner side of the connecting part 24j in the radial direction are shown as the "second abutting face 24k". The first abutting face 24k1 is one side first abutting face and the first abutting face 24k2 is the other side first abutting face. In this embodiment, the first abutting face 24k1 is formed with a protruded part for positioning so as to protrude in the circumferential direction, and a recessed part which is engaged with the protruded part is formed in the first abutting face 24k2.

When viewed in the upper and lower direction, an angle θ1 (see FIG. 4) formed by the first abutting face 24k1 and the center line "CL" in the circumferential direction of the salient pole part 24b connected with the outer peripheral part 24e1 and an angle θ2 (see FIG. 4) formed by the first abutting face 24k2 and the center line "CL" in the circumferential direction of the salient pole part 24b connected with the outer peripheral part 24e2 are set to be smaller than an angle θ3 (see FIG. 4) formed by the second abutting face 24k and the center line "CL" in the circumferential direction of the salient pole part 24b connected with the outer peripheral part 24e in which the second abutting face 24k is formed.

In other words, the angles θ1 and θ2 are set to be smaller than the angles θ3 which are formed by the second abutting faces 24k formed at both ends of the outer peripheral part 24e except the outer peripheral parts 24e1 and 24e2 and the center line "CL" in the circumferential direction of the salient pole part 24b connected with the outer peripheral part 24e formed with the second abutting faces 24k. Further, the angles θ1 and θ2 are smaller than the angle θ3 formed by the second abutting face 24k formed in the outer peripheral part 24e1 and the center line "CL" in the circumferential direction of the salient pole part 24b connected with the outer peripheral part 24e1. Further, the angles θ1 and θ2 are smaller than the angle θ3 formed by the second abutting face 24k formed in the outer peripheral part 24e2 and the center line "CL" in the circumferential direction of the salient pole part 24b connected with the outer peripheral part 24e2.

The angles θ1 and θ2 are set to be slightly smaller than the angle θ3. Further, the angle θ1 and the angle θ2 are equal to each other. Further, the angle θ3 is set to be 30° and the angles θ1 and θ2 are set to be less than 30°. In accordance with an embodiment of the present invention, the angle θ1 may be different from the angle θ2. Further, when viewed in the upper and lower direction, the imaginary lines "VL1" and "VL2" which pass the first abutting faces 24k1 and 24k2 and are extended from the first abutting faces 24k1 and 24k2 to an inner side in the radial direction passes the axial center "C1" of the stator 6. Further, the imaginary line "VL3" which passes the second abutting face 24k and is extended from the second abutting face 24k to an inner side in the radial direction passes the axial center "C1" of the stator 6.

The insulator 25 is formed of insulating material such as resin. The insulator 25 is attached to each of the salient pole parts 24b and the stator 6 includes six insulators 25. In other words, the stator 6 includes the same number of the insulators 25 as the number of the salient pole parts 24b. Further, the insulator 25 is formed in a tube shape with flanges whose both ends are provided with flange parts and is attached to the salient pole part 24b so that an axial direction of the insulator 25 and the radial direction of the stator 6 are coincided with each other. The insulator 25 is structured of a first insulator 30 and a second insulator 31 which are capable of being divided in the upper and lower direction, and the first insulator 30 disposed on a lower side and the second insulator 31 disposed on an upper side are combined with each other to form the insulator 25.

An upper end side portion of the terminal pin 26 is press-fitted and fixed to the first insulator 30, and a lower end side portion of the terminal pin 26 is protruded from the first insulator 30 to a lower side. The drive coil 23 is structured of a conducting wire made of aluminum alloy or copper alloy. The drive coil 23 is wound around the salient pole part 24b through the insulator 25. One end part of the drive coil 23 is bound and fixed to one of two terminal pins 26 fixed to the first insulator 30, and the other end part of the drive coil 23 is bound and fixed to the other of the two terminal pins 26.

### (Manufacturing Method for Stator)

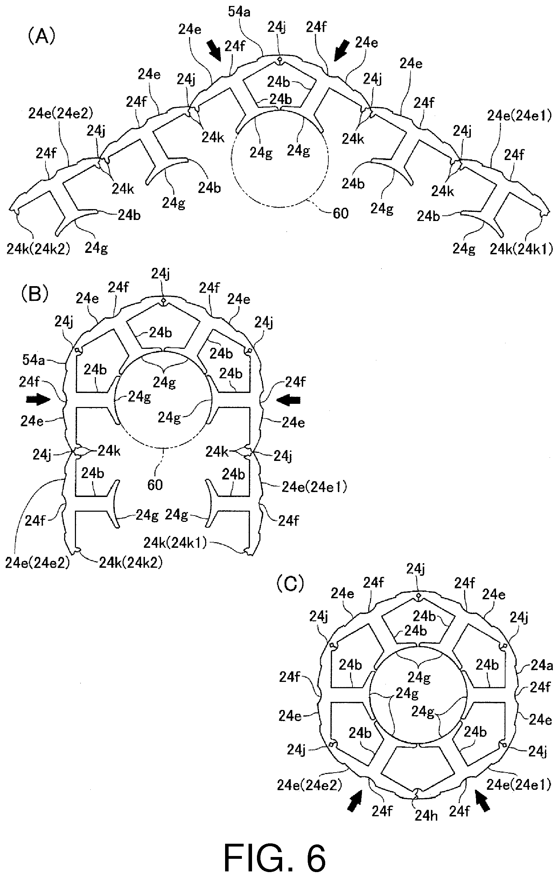

FIG. 5 is a plan view showing an original core body 54 which becomes the stator core 24 shown in FIG. 3 after being processed. FIG. 6 are explanatory views showing a forming method for the stator core 24 shown in FIG. 3.

The stator 6 is manufactured as described below. First, insulators 25 are attached to an original core body 54 (see FIG. 5) which becomes the stator core 24 after being processed. The original core body 54 is, as shown in FIG. 5, provided with a belt-shaped part 54a in a straight line shape, which is structured of six outer peripheral parts 24e connected with each other through connecting parts 24j, and six salient pole parts 24b which are protruded from each of the six outer peripheral parts 24e in a direction perpendicular to a longitudinal direction of the belt-shaped part 54a. In the original core body 54, a recessed part 24f and abutting faces 24k are formed in the outer peripheral part 24e. Further, the outer peripheral part 24e disposed at one end of the original core body 54 is the outer peripheral part 24e1 and the outer peripheral part 24e disposed at the other end of the original core body 54 is the outer peripheral part 24e2.

After that, the terminal pins 26 are press-fitted and fixed to the insulators 25, and the drive coils 23 are wound around the salient pole parts 24b through the insulators 25 and the drive coils 23 are soldered and fixed to the terminal pins 26.

After that, the belt-shaped part 54a is successively bent at positions of the connecting parts 24j so that the belt-shaped part 54a in a straight line shape becomes an outer peripheral ring part 24a formed in a ring shape, and so that the salient pole parts 24b are protruded to an inner side in a radial direction of the outer peripheral ring part 24a. Specifically, the belt-shaped part 54a is successively bent in the order shown in FIGs. 6(A) through 6(C) from the center of the belt-shaped part 54a to both end sides. When the belt-shaped part 54a is to be bent, a jig for bending (not shown) is abutted with and pressed against the recessed part 24f from directions shown by the arrows in FIG. 6 and the belt-shaped part 54a is bent. Further, when the belt-shaped part 54a is to be bent, a jig 60 in a columnar shape with which the tip end faces 24g of the salient pole parts 24b are abutted is used. In FIG. 6, the drive coils 23, the insulators 25 and the terminal pins 26 are not shown.

After that, the end parts of the belt-shaped part 54a are connected with each other by welding or the like to form a joint 24h. In other words, the abutting face 24k1 and the abutting face 24k2 are joined each other by welding or the like. When the end parts of the belt-shaped part 54a are connected, the stator 6 is completed. In this embodiment, when the stator 6 is completed, the cylindrical tube part 11b of the partition member 11 is inserted on an inner peripheral side of the stator 6. After that, the circuit board 4 is fixed to the partition member 11 and the terminal pins 26 are soldered and fixed to the circuit board 4. Further, after that, the resin sealing member 12 is formed so as to cover the stator 6 and the circuit board 4.

### (Principal Effects in this Embodiment)

As described above, in this embodiment, the angle θ1 formed by the first abutting face 24k1 abutted with the first abutting face 24k2 at the joint 24h of the outer peripheral ring part 24a and the center line "CL" of the salient pole part 24b connected with the outer peripheral part 24el and, the angle θ2 formed by the first abutting face 24k2 abutted with the first abutting face 24k1 and the center line "CL" of the salient pole part 24b connected with the outer peripheral part 24e2 are set to be smaller than the angle θ3 formed by the second abutting face 24k and the center line "CL" of the salient pole part 24b connected with the outer peripheral part 24e in which the second abutting face 24k is formed.

Therefore, according to this embodiment, in the stator core 24 which is manufactured so that the belt-shaped part 54a structured of the six outer peripheral parts 24e connected with each other through the connecting parts 24j is successively bent at the connecting parts 24j as shown in FIG. 6, and that the first abutting face 24k1 and the first abutting face 24k2 are finally abutted with each other to form the joint 24h, even when the number of the salient pole parts 24b is relatively small, the tip end faces 24g of the salient pole parts 24b connected with the outer peripheral parts 24e1 and 24e2 can be brought close to the imaginary circle "VC1" when viewed in the upper and lower direction. Accordingly, in this embodiment, even when the number of the salient pole parts 24b of the stator core 24, which is a curling core, is relatively small, when viewed in the upper and lower direction, deterioration of circularity of a circle formed by the six tip end faces 24g can be suppressed.

### (Other Embodiments)

Although the present invention has been shown and described with reference to a specific embodiment, various changes and modifications will be apparent to those skilled in the art from the teachings herein.

In the embodiment described above, it may be structured that the angle θ3 (hereinafter, this angle is referred to as θ31, see FIG. 4), which is formed by the second abutting face 24k of the outer peripheral part 24e1 and the center line "CL" of the salient pole part 24b connected with the outer peripheral part 24e1, and the angle θ3 (hereinafter, this angle is referred to as θ32, see FIG. 4), which is formed by the second abutting face 24k of the outer peripheral part 24e2 and the center line "CL" of the salient pole part 24b connected with the outer peripheral part 24e2, are set to be larger than the angle θ3 (hereinafter, this angle is referred to as θ33, see FIG. 4), which is formed by the second abutting face 24k formed at each of both ends of the outer peripheral part 24e except the outer peripheral parts 24e1 and 24e2 and the center line "CL" of the salient pole part 24b connected with the outer peripheral part 24e formed with the second abutting face 24k. For example, θ31 and θ32 may be slightly larger than θ33.

In this case, the tip end faces 24g of the salient pole parts 24b connected with the outer peripheral parts 24e1 and 24e2 can be further brought close to the imaginary circle "VC1". Therefore, even when the number of the salient pole parts 24b of the stator core 24, which is a curling core, is relatively small, when viewed in the upper and lower direction, deterioration of circularity of a circle formed by the six tip end faces 24g can be effectively suppressed. In this case, the outer peripheral parts 24e1 and 24e2 are the first outer peripheral parts. Further, in this case, the angle θ31 and the angle θ32 may be equal to each other and, alternatively, the angle θ31 and the angle θ32 may be different from each other.

In the embodiment described above, the stator core 24 is a laminated core. However, in a case that the stator core 24 is a curling core, the stator core 24 is not required to be a laminated core. Further, in the embodiment described above, the motor 3 is used in a pump device 1. However, the motor 3 may be used in a device other than the pump device 1. Further, in the embodiment described above, the stator 6 is used in the motor 3. However, the stator 6 may be used in a power generator.

### REFERENCE SIGNS LIST

1 pump device
2 impeller
3 motor
5 rotor
6 stator
9 pump chamber
11 partition member
12 resin sealing member
14 drive magnet
23 drive coil (coil)
24 stator core
24a outer peripheral ring part
24b salient pole part
24e outer peripheral part
24e1, 24e2 outer peripheral part (first outer peripheral part)
24h joint
24j connecting part
24k abutting face
24k1, 24k2 first abutting face
25 insulator (insulation member)
"CL" center line in the circumferential direction of the salient pole part
θ1, θ2 angle formed by the first abutting face and the center line in the circumferential direction of the salient pole part
θ3 angle formed by the second abutting face and the center line in the circumferential direction of the salient pole part
θ31, θ32 angle formed by the second abutting face of the first outer peripheral part and the center line in the circumferential direction of the salient pole part
θ33 angle formed by the second abutting face of the outer peripheral part except the first outer peripheral part and the center line in the circumferential direction of the salient pole part

## Claims

1. A stator formed in a tube shape, the stator comprising:
a coil;
an insulation member; and
a stator core comprising a plurality of salient pole parts, the coil being wound around each of the plurality of the salient pole parts through the insulation member;
wherein the stator core comprises:
an outer peripheral ring part which is formed in a ring shape; and
the plurality of the salient pole parts which are protruded from the outer peripheral ring part to an inner side in a radial direction of the stator and are disposed at regular intervals in a circumferential direction of the stator;
wherein the outer peripheral ring part is structured of a same number of the outer peripheral parts as a number of the plurality of the salient pole parts;
wherein a plurality of the outer peripheral parts is arranged in the circumferential direction and each of the plurality of the outer peripheral parts is connected with one of the salient pole parts;
wherein one of boundaries of the outer peripheral parts in the circumferential direction is formed with a joint;
wherein remaining boundaries of the outer peripheral parts in the circumferential direction except a boundary formed with the joint are formed with connecting parts which connect outer side ends of the outer peripheral parts in the radial direction with each other;
wherein each of both ends of the outer peripheral part in the circumferential direction is formed with an abutting face in a flat face shape whose shape when viewed in an axial direction of the stator is a straight line,
abutting faces of the outer peripheral parts adjacent to each other in the circumferential direction being abutted with each other; and
wherein when two abutting faces abutted at the joint are referred to as a first abutting face and the abutting faces abutted on an inner side in the radial direction of the connecting part are referred to as a second abutting face,
an angle formed by the first abutting face and a center line in the circumferential direction of the salient pole part connected with the outer peripheral part formed with the first abutting face is set to be smaller than an angle formed by the second abutting face and a center line in the circumferential direction of the salient pole part connected with the outer peripheral part formed with the second abutting face when viewed in the axial direction.

2. The stator according to claim 1, wherein
when the outer peripheral part formed with the first abutting face is referred to as a first outer peripheral part,
an angle formed by the second abutting face of the first outer peripheral part and a center line in the circumferential direction of the salient pole part connected with the first outer peripheral part is set to be larger than an angle formed by the second abutting face of the outer peripheral part except the first outer peripheral part and a center line in the circumferential direction of the salient pole part connected with the outer peripheral part formed with the second abutting face.

3. The stator according to claim 1, wherein
when one of the two abutting faces abutted with each other at the joint is referred to as a one side first abutting face and the other is referred to as the other side first abutting face,
an angle formed by the one side first abutting face and a center line in the circumferential direction of the salient pole part connected with the outer peripheral part formed with the one side first abutting face is equal to an angle formed by the other side first abutting face and a center line in the circumferential direction of the salient pole part connected with the outer peripheral part formed with the other side first abutting face when viewed in the axial direction.

4. The stator according to claim 1, wherein
when one of the two abutting faces abutted with each other at the joint is referred to as a one side first abutting face and the other is referred to as the other side first side abutting face,
the one side first abutting face is formed with a protruded part for positioning which is protruded in the circumferential direction, and
the other side first abutting face is formed with a recessed part with which the protruded part is engaged.

5. The stator according to claim 1, wherein
the stator core comprises six pieces of the salient pole parts,
the angle formed by the second abutting face and the center line in the circumferential direction of the salient pole part connected with the outer peripheral part formed with the second abutting face is 30° when viewed in the axial direction, and
the angle formed by the first abutting face and the center line in the circumferential direction of the salient pole part connected with the outer peripheral part formed with the first abutting face is less than 30° when viewed in the axial direction.

6. A motor comprising:
the stator defined in one of claims 1 through 5; and
a rotor which comprises a drive magnet and is disposed on an inner peripheral side with respect to the stator.

7. A pump device comprising:
the motor defined in claim 6;
an impeller which is attached to the rotor;
a pump chamber in which the impeller and the rotor are disposed and through which a fluid is passed;
a partition member which is disposed between the stator and the pump chamber and which prevents an inflow of the fluid in the pump chamber into an arrangement portion of the stator; and
a resin sealing member made of resin which covers the stator.
